# EUROPEAN PATENT APPLICATION

(11) **EP 3 929 787 A1**
(43) Date of publication of application: **29.12.2021**
(21) Application number: 20203873.3
(22) Date of filing: 26.10.2020
(51) Int. Cl.: G06F 21/62, G06F 21/55, G06F 21/57

(54) **DETECTING SENSITIVE DATA RECORDS USING A DATA FORMAT ANALYSIS**

(30) Priority: 22.06.2020 US 202063042075 P
(71) Applicant: CA, Inc., New York, NY 10022 (US)
(72) Inventor: Zuo, Jinyu, Concord, CA California 94519-1854 (US); Tiwari, Pushkar Raj, Dublin, CA California 94568 (US)
(74) Representative: Dilg, Haeusler, Schindelmann Patentanwaltsgesellschaft mbH

(57) **Abstract**

A method and a device are described for detecting sensitive data records comprised in a data file. The provided method comprises (a) providing the data file; (b) identifying at least one data format of the provided data file; (c) detecting data records of the provided data file based on the identified data format; (d) determining at least one characteristic feature of the provided data file by analyzing the detected data records; and (e) calculating a sensitivity parameter of the provided data file based on the determined characteristic feature(s) by applying Data Loss Prevention rules to the determined characteristic feature. If (f1) the calculated sensitivity parameter is below a predefined threshold, a further processing of the data file is allowed. If (f2) the calculated sensitivity parameter is above a predefined threshold, modifying a further processing of the data file.

## Description

### TECHNICAL FIELD

The present invention generally relates to the technical field of data traffic security and in particular to a computer implemented method performing a so-called Data Loss Prevention. In particular, the present invention relates to a method and a device for detecting sensitive data records comprised in a data file.

### ART BACKGROUND

The leakage of proprietary and/or confidential data is a continuing problem for organizations such as corporations, governments and universities. Ubiquitous remote network access to an organization's computers increases productivity and is convenient, but at the same time creates challenges for protecting the data from being accessed by unauthorized parties such as competitors or criminals. Leakage of confidential enterprise data can result both from intentional activity by unscrupulous employees, as well as unintentional but negligent actions of employees not following robust security protocols. Sensitive data which should be protected from being accessed or retrieved may be for instance any kind of Personally Identifiable Information (PII). Potential retrieval channels may be for instance a data storage on a memory such as a USB stick, an Email with or without an attached retrieved file, a screenshot, a paper printout, etc.

Tools for tracking data access and usage are known and are typically used by administrators of computer networks of organizations. Such tools include e.g. (a) a Data Loss Prevention (DLP) software, (b) Data Identifiers (DI), (c) an Exact Data Matching (EDM) software/routine, (d) an Exact Match Data Identifiers (EMDI), and (e) indexers. It is mentioned that the tools (b), (c) and (d) are normally features of (a) and (e) is normally a component of (a).
(A) A DLP software detects potential data breaches/data exfiltration transmissions and prevents them by monitoring, detecting and blocking sensitive data (i) while in use by means of endpoint actions, (ii) while in motion by checking network traffic, and (iii) while being at rest in a data storage. DLP rules are typically set by (the administrators of) the organization operating computer network because only they know which data records may be sensitive enough in order to decide if some actions are needed for the respective data file.
(B) A DI tries to find a certain character pattern for sensitive information instead of focusing on any individual data. Such a character patten may be for example the US Social Security Number (US SSN) or the German Identity card number.
(C) An EDM software/routine will check concurrence of multiple fields from indexed data which are stored in structured or tabular format and which should be protected. If identified matches (or hits) are from the same data record in the scanned / queried data, the respective document is typically considered as to be critical. However, fields can be from different data records being assigned, for instance, to different people. In this case the algorithm of an EDM software/routine may still think that there is match. This will lead to a so called "false positive".
(D) An EMDI software/routine uses DI within an EDM software for a speed up of look-up procedures. Fields in the same row of an indexed table may be used as so-called validators.
(E) An indexer is a software tool which converts customer data to an "index" file which will be read respectively interpreted by a DLP software for index based features.

When dealing in particular with a high volume of data all these tools have the problem of a high number of false positives. For example, any nine (9) digit number can be flagged as a possible US SSN number by DI algorithms, but it can be just an employee ID, a customer ID, a product ID or other national ID numbers.

Even when index based DLP features is used it may be difficult to find a proper file to index. Index based DLP features are operationally and organizationally challenging to implement, which hinders their adoption. Even if a proper file can be found to be indexed, that file may only cover known data such as e.g. existing employees, customers etc. which however may change frequently.

Due to the drawbacks described above it is difficult to protect a high volume of potentially sensitive data such as PII from being accessed and/or retrieved without (i) a significant operational investment and organizational challenges or (ii) sacrificing accuracy.

It is an object of the invention to improve DLP detection which allows to prevent a large volume sensitive data leakage.

### SUMMARY OF THE INVENTION

This object is solved by the subject matter according to the independent claims. Advantageous embodiments of the present invention are described by the dependent claims.

According to a first aspect of the invention there is provided a method for detecting sensitive data records comprised in a data file. The provided method comprises several steps which are carried out by a data processor or by a data processing system comprising more than one data processor. Specifically, the provided method comprises (a) providing the data file to a data processor; (b) identifying at least one data format of the provided data file; (c) detecting data records of the provided data file based on the identified (at least one) data format; (d) determining at least one characteristic feature of the provided data file by analyzing the detected data records; (e) calculating a sensitivity parameter of the provided data file based on the determined characteristic feature(s) by applying Data Loss Prevention rules to the determined characteristic feature; (f1) if the calculated sensitivity parameter is below a predefined threshold, allowing a further processing of the data file, and (f2) if the calculated sensitivity parameter is above a predefined threshold, modifying a further processing of the data file. Depending on the specific application and in particular on a sensitivity level of the data file modifying the further processing may comprise a changing of the originally intended processing or a blocking of a further processing.

The described method is based on the idea that by performing a data format analysis or a structure analysis of a data file sensitive data records can be detected in an effective and reliable manner. Hence, for large data files comprising at least some types of sensitive information, e.g. Personally Identifiable Information (PII), large scale data leaks can be prevented with a comparatively a small computing power. In particular, a data export of sensitive structured/formatted data e.g. by means of an "Export" action can be prevented.

Descriptively speaking, in the described method the format/structure of the provided data file will be analyzed/identified and structured data will be checked as data records. Thereby, various delimiters including newline characters may be checked. In this context data records will look like paragraphs/sections if a newline command serves as a delimiter.

In this document the term "data file" may refer to any representation of digital data. The data file may be an original data file used by one or more software programs such as e.g. a word processing program or a spreadsheet. However, the data file may also be text or numbers extracted from an original file. Further, the data file may be in the format of file system file, or even just a chunk of memory buffer.

In this document the term "data format" may refer to any logical arrangement, concatenation, and/or assignment of individual data records. In an editable format of the data file the individual data records may be arranged in any arbitrary predefined manner. It is preferable, however not essential, that each individual data record can be differentiated from another individual data record, e.g. by means of a delimiter such as a newline character.

It is mentioned that, as indicated in this document by the term "at least one data format" a data file may not only have one data format but two or even more data formats. This may be the case for instance if multiple tables and/or multiple files have been pasted into a single data file.

In this document the term "data record" may refer to any piece of information which is comprised in the data file. A data record may also be referred to as a data entry, a data field, or a data value. The data record may comprise any characters such as alphabetic characters, numerals, or combinations thereof. In some embodiments, a data record comprises two or more data entries, data fields, or data values.

In the context of this document the term "characteristic feature" may refer to any piece of information which can be obtained by means of a feature extraction algorithm being applied to the data records which have been detected with the help of the previously identified data format. The characteristic feature may be any piece of information being assigned to at least one data record, at least one column and/or at least one row of the provided data file and characterizing the type of the comprised at least one data record. Further, the characteristic feature may be indicative for the characteristic of the entire data file. The characteristic feature may be a data file feature such as the data volume of the data file, the complexity of the identified data format, the type of a data record and/or a column, the properties of the data records comprised in the data file, etc.

In this document the term "sensitive parameter" may refer to any parameter which is capable of being used for characterizing a sensitivity of data with regard to a data loss. Thereby, any suitable standard of evaluation can be used for the damage which would result from a data loss. In this context the damage may not only by a financial damage but also a penal damage, a reputational damage, etc.

In this document the term "threshold" may be any criterion which is suitable for distinguishing between a sensitive data record / data file and a non-sensitive data record / data file. Thereby, the threshold may be a threshold value on a numeric scale, wherein e.g. higher numbers are indicative for a higher sensitivity and lower numbers are indicative for a lower sensitivity of the respective data records / data files. Alternatively or in combination, the threshold may be given by a list of several types of possible data records which types are considered as to be sensitive (or not sensitive). If the sensitive parameter matches with at least one entry of this list, the respective data file is considered as to be sensitive (or not sensitive). A "predefined threshold" may be such a criterion which has been set or selected by an administrator and/or by data security regulations of the organization operating and/or using the respective data network. Setting the predefined threshold may be based on a variety of different aspects and in particular on a damage being expected if a data loss would occur. Further, the predefined threshold setting may be based on the awareness and/or the reliability of users of the data network with regard to a data loss. In this document the term "data network" may refer to at least one device allowing or enabling a data flow or storage which is used or managed by a customer/ organization.

According to an embodiment of the invention the data file comprises at least a two-dimensional data format. This means that the data records are or can be arranged in a two-dimensional (2D) table having columns and rows. Thereby, any delimiter between two data fields within one row can be used for defining the next data field being assigned to the next column. It is mentioned that in some (but not very common) use cases even a data file with only one row/column can be processed with the described method.

According to a further embodiment of the invention identifying the data format comprises comparing the format of the data file with at least one predefined data format. This may significantly facilitate the data format identification step such that the data format can be identified quickly, i.e. with a small computing power, and/or with a high reliability, i.e. with low probability for a wrong data format identification.

In some preferred embodiments, the data file is compared with several known respectively standardized data formats. Such standardized data formats may include the data formats CSV (Comma Separated Values), XLS (Excel), XML (Extensible Markup Language), JSON (JavaScript Object Notation), etc.

Comparing the data file format with the CSV format may be realized with a simple (self-written) parsing algorithm. Thereby, it can be checked whether different rows/paragraphs have the same number of data fields in order to ensure that columns can be extracted in a lossless manner. It is mentioned that it may also be possible that tabular data are embedded within another document, such as a Word document.

For XML/JSON type of data it might be preferable to use a third party commercially available parsing algorithm. With such an algorithm it can be checked whether the data records are arranged with the same structure in order to ensure also in this case that columns can be extracted in a correct manner. It is mentioned that in this context it may not be necessary to have at the top level a data record / data field which is indicative for or which characterizes the type of assigned data records.

According to a further embodiment of the invention the method further comprises, after (c) detecting the data records, grouping similar data records together. This may allow for a systematic data record detection wherein the risk of missing data records will be minimized.

According to a further embodiment of the invention the method further comprises, after (c) detecting the data records, processing the data records.

According to a further embodiment of the invention processing the data records comprises reorganizing the data records in a memory. The reorganizing can be realized in such a manner that the data records can be processed (i) data record by data record, (ii) column by column, and/or (iii) row by row. This may allow for determining the at least one characteristic feature in a particular fast and reliable manner.

According to a further embodiment of the invention the characteristic feature is at least one data file feature of the group consisting of (i) a data volume of the data file, (ii) a complexity of the identified data format, (iii) a type of at least one data record, of at least one row and/or of at least one column, (iv) at least one data property, such as variability of values or range of values. Generally, any statistics which may reflect the sensitivity level of the data file could be used as the characteristic feature.

Re (i): The data volume may be assessed by the number of the data records, the number of rows and/or the number of columns. The data volume may be a relevant characteristic feature because it is obvious that if a data file contains a large number of data records, rows and/or columns it may be an "exported" file, which has a higher chance to be an "internal-use-only" data file and should be protected from further processing.

Re (ii): In some embodiments the data format complexity is simply the number of columns. In some embodiments, the data format complexity may be given by the total number of nodes, a tree depth/nesting level, based on the type of the data format, which may be e.g. a tree array where each record is a hierarchical tree or a multi-dimensional matrix where each record is a matrix with 2 or more dimensions.

Re (iii): The data record type, the row type, and/or the column type may be any one of the data record types which, in some embodiments, are also and already detected in the step of detecting the data records within all pieces of information contained in the provided data file.

In preferred embodiments a column Data Identifier (DI) is used. A table can be transposed to use column DI if each row has the same type of data. With such a DI it can be checked whether a column looks like a US SSN (US Social Security Number) column, a name column, an address column, a date / time column, or a money column. It can be generally checked whether the respective column is a column containing PII information or other sensitive data.

Re (iv): One data property may be the variability of values (such as entropy) of one or more columns. Thereby, the entropy measures the randomness of the respective data records. Typically, if there is a high data entropy, the respective file is considered as to be more sensitive than a data file with all columns having a lower data entropy. Another data property may be the range of values of one or more columns. In case of a date / time column the property can be for instance which data entry / row contains the latest date / time. In case of a money column the property can be which data entry / row contains the largest amount.

With regard to the type of the at least one data record it is mentioned that the data record type can be detected in many use cases based on a search for a regular expression (regex). For example, if within one column a majority of the data entries matches a certain regex, then the probability of a precise data type classification will be really high. This probability may be further increased if the data entries or data records are of a number type and comprise a "check digit" as a validator. Depending on the specific application the data type can be
(1) an index number which is monotonically increasing,
(2) a date which matches a regex for common date formats,
(3) a monetary amount with a currency sign, such as "$",
(4) a number of a credit card (CC) which may be detected or at least assumed with the help of a regex and/or a so called Luhn check,
(5) a PII such as a US SSN with nine random digits,
(6) a name which can be detected / assumed by means of a comparison of a list of popular names,
(7) an address which may be detected / assumed with a string comprising at least one numeral and at least one (meaningful) word,
(8) a Zone Improvement Plan (ZIP) Code which may be detected / assumed with a predefined number of digits (depending on the country specific ZIP code assignment),
(9) a percentage which may be detected / assumed with the occurrence of the symbol "%",
(10) an Email address which may be detected / assumed with the occurrence of the symbol "@" and which can be identified as personal Emails for instance if they do not match with any data entry within a (look-up) database, and
(11) an ID number/hash value which can be detected / assumed e.g. with a comparison with other data entries having exactly the same length and the same pattern.

Most of the above-mentioned data types may not be sensitive by themselves. However, they may become sensitive if it turns out that at least some of them are assigned to one and the same person.

It is mentioned that in some use cases the majority of data entries within a column are detected / assumed as to be of the same data type. In this case the whole column may be assumed as to be of that data type.

According to a further embodiment of the invention the method further comprises determining at least one further characteristic feature of the provided data file and applying further Data Loss Prevention rules to the at least one further characteristic feature. Thereby, for determining the characteristic feature a first subset of the detected data records is used and for determining the further characteristic feature a second subset of the detected data records is used. The second subset is different from the first subset. Further, the sensitivity parameter of the provided data file is calculated further based on the determined further characteristic feature.

Put in other words, the sensitivity parameter depends not only on one characteristic feature but at least on one further characteristic feature. Hence, the data basis for calculating the sensitivity parameter will be enlarged and, as a consequence, the reliability of the sensitivity parameter will be increased.

The difference between the first subset and the second subset may be such that there is no overlap between the two subsets. This means that there is no data record which belongs or is assigned to both subsets. However, there are also embodiments where the data records of both subsets are not disjoint.

The described data basis enlargement may be of advantage in particular for cases where one characteristic feature being assigned to one data record subset is not sufficiently indicative for a sensitivity of the data file but where a combination of different characteristic features being assigned to different data record subsets provides a sufficient sensitivity indication in order to decide whether further processing of the respective data file should be allowed. The two different subsets may belong to different rows and/or different columns of a 2D data file.

In some embodiments the first subset is assigned to a first column and the second subset is assigned to a second column being different from the first column. In a concrete application scenario possible credit card (CC) numbers without an expire date and/or without a Card Validation Value (CVV) code will be marked as non-sensitive. Further, possible US Social Security Number (US SSN) numbers without a name field next to may also be marked as non-sensitive.

According to a further embodiment of the invention the provided data file comprises a first data file portion and at least one second data file portion, which have been separated from each other into different subordinate files. This may mean that multiple (subordinate) files, which belong to one and the same superordinate data file, here denominated simply data file, will be checked at the same time.

The described sensitive data record detection with different data file portions respectively different subordinate files may be of advantage in particular for use cases wherein a large number of data records of one superordinate data file are separated, for instance by an employee, into different smaller files. In this case the described stateful respectively overall approach is necessary for a robust estimation of the sensitivity of a large volume (superordinate) data file. The different smaller files may be stored in the same folder or may be included as multiple attachments in one and the same email (email thread).

According to a further embodiment of the invention the method further comprises (g1) validating a type of at least some detected data records and (g2) applying a result of the validation to Data Identifiers associated with the detected data records. This may allow for removing possible false positive results in an effective manner.

The "at least some detected data records" may generally be any selection of data records included in the provided data file. In some embodiments the "at least some detected data records" belong to one and the same column or form one column of the respective (two-dimensional) data file.

For example, a DI on a pure "digit string", i.e. a string with only digits, may have a very high false positive rate. In some embodiments the column type, the result of a column DI, can remove false positives from the same column. For example, a random 16 digits number which can pass the Luhn check may get detected as a CC number (e.g. with a 10% chance). However, a column of numbers that all pass the Luhn check may be extremely rare for random numbers. If less than 50% entries from a column can pass the Luhn check, then all the CC DI triggered in that column will be marked as false positives. So, instead of checking data entry by data entry, the false positive rate may be reduced if several data entries being assigned to different (sets of) rows are checked in combination (column DI). In other embodiments the column type, the result of column DI, can remove false positives from other columns. For example, one may not be very sure whether a nine digits number column is a real SSN column as SSN does not have a validation check algorithm (e.g. check digit). However, all SSN DI triggered in that column will be marked as false positives if there is no another column which looks like containing data entries with person names.

According to a further embodiment of the invention the method further comprises (h) suggesting a modified or additional Exact Data Matching (EDM) profile and/or modified or additional Exact Match Data Identifiers (EMDI) based on the at least one characteristic feature.

Descriptively speaking, with the (determined) at least one characteristic feature a certain type of data record can be found/identified in the provided data file. Hence, the described modified or additional Exact Data Matching profile may be specifically adapted to this type of data record. The same holds true for possible modified or additional Exact Match Data Identifiers.

This embodiment may take benefit from the matter of fact that an EDM profile can be specifically and easily generated from tabular data. If there is a high confidence of finding a sensitive table or at least sensitive data records, a suggestion of indexing this table to an EDM profile may be given, e.g. by means of an appropriate pop up message, to an administrator of the respective customer.

According to a further aspect of the invention there is provided device for detecting sensitive data records comprised in a data file. The provided device comprises a data processor, which is programmed and configured for performing (embodiments of) the above described method.

According to a further aspect of the invention there is provided a computer program for detecting sensitive data records comprised in a data file. The computer program, when being executed by a data processor, is configured for controlling and/or for carrying out (embodiments of) the above described method.

As used herein, reference to a computer program is intended to be equivalent to a reference to a program element and/or to a computer readable medium containing instructions for controlling a computer system to coordinate the performance of the above described method.

The computer program may be implemented as a computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

Embodiments of the invention may be realized by means of a computer program respectively software. However, embodiments of the invention may also be realized by means of one or more specific electronic circuits respectively hardware. Furthermore, the embodiments of the invention may also be realized in a hybrid form, i.e. in a combination of software modules and hardware modules.

Embodiments of the invention described in this document may also be realized in connection with a "CLOUD" network which provides the necessary virtual memory spaces and the necessary virtual computational power.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter, also any combination between features relating to different subject matters, in particular between features of the method type claims and features of the apparatus type claim is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### BRIEF DESCRIPTION OF THE DRAWING

Figure 1 shows a flowchart of a method for detecting sensitive data records using a preceding data format analysis of the respective data file.
Figure 2 shows in a schematic representation a device for detecting sensitive data records with the method described with reference to Figure 1.
Figure 3a to 3c show two-dimensional data file comprising employee data of a company in the different formats XML, CSV, and JSON.

### DETAILED DESCRIPTION

Before, referring to the drawings, some basic considerations will be summarized based on which exemplary embodiments of the invention have been developed.

With the described method data files are analyzed based on at least one identified data format. A (value for a) sensitivity parameter is calculated and, based on the calculated (value of the) sensitivity parameter it is decided whether further processing of the data file is allowed as normal or an intervention is necessary or at least appropriate. All kinds of interventions related to the detection of sensitive data such as blocking, message quarantine, user notification, administrator notification, incident generation as well as combinations of those and even other responses can be used. By blocking further processing of the data file an unauthorized data leakage of potentially sensitive data records can be prevented.

Embodiments of the method for detecting sensitive data records, which are described in this document, analyze the data format respectively the data format of the data file under examination. Structured data contained in the data file will be detected as data records. Thereby, various delimiters including newline characters may be checked. In this context data records will look like paragraphs/sections if a newline character serves as a delimiter.

The data records will be checked by taking into account the previously identified data record structure, such as record by record and column by column, and then the volume, structure complexity, data field/column type, data properties may be calculated based on the DLP rules which will be applied.

Data field/column type may be checked respectively validated and then applied to detected Data Identifiers (DI) results in order to remove possible false positives.

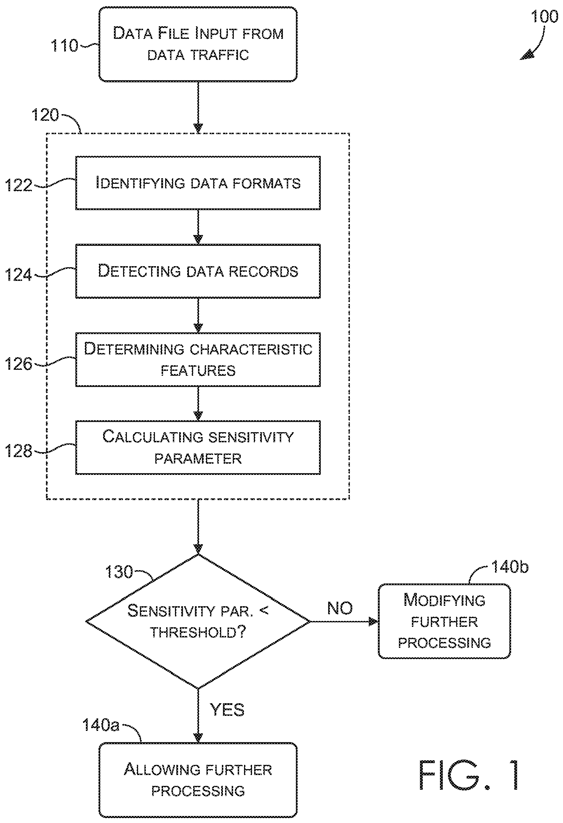

Figure 1 shows a flowchart 100 of a method for detecting sensitive data records comprised in a data file with a preceding data format analysis of the data file.

In a first step 110 a data file to be checked is retrieved from a data traffic under examination and is provided to a non-depicted data processor. The data file may be the original file or text content extracted from the original file using an optional "content extraction" step where e.g. the data file will be (i) unzipped if it is compressed, (ii) deciphered if it is encrypted, (iii) subjected to an Optical Character Recognition (OCR) routine if it is an image, or (iv) even subjected to a barcode scanning if the image contains barcode(s) etc. Further, the data file can be in the format of file system file, or just a chunk of memory buffer. The provided data file is analyzed / checked in a process sequence 120, which according to the exemplary embodiment described here comprises four steps 122, 124, 126, and 128.

In step 122 the data format respectively the data format is identified. This can be done by comparing the structure of at least a part of the data file with the structures of several predefined and preferably standardized data formats such as CSV (Comma Separated Values), XLS (Excel), XML (Extensible Markup Language), JSON (JavaScript Object Notation), etc.

In step 124 the data entries in the data file are detected as data records after the data have been parsed. Thereby, the previously identified data format is taken into account.

In step 126 at least one characteristic feature of the provided data file is determined by analyzing the detected data records.

In step 128 a sensitivity parameter of the provided data file is calculated when Data Loss Prevention rules are applied to the detected characteristic features. For this calculation the previously determined characteristic feature is taken into account. Examples for possible characteristic features are described above in this document. A set of DLP rules will be provided as default rules to make the system usable out of the box.

In a further query step 130 it is checked whether the calculated sensitivity parameter is below or above a predefined threshold (value). If the sensitivity parameter is below the predefined threshold (value), the data file is considered as to be not sensitive and further processing of the data file is allowed (see reference numeral 140a). This means that the data file can be forwarded to a so-called data channel. Examples for data channels are (i) a data storage on a memory such as a USB stick, (ii) an Email with or without the data file sent to a recipient, (iii) a screenshot, (iv) a paper printout, etc. If the sensitivity parameter is above the predefined threshold (value) the data file is considered as to be sensitive and a further processing of the data file is blocked (see reference numeral 140b).

In some implementations, the response in step 140b can be more complex than just simply blocking the file. Instead of preventing further processing of the data file the further processing of the data file can be changed. For example, if allowed under the local data protection act, an email can be redirected or additionally sent to another recipient, e.g. a company manager.

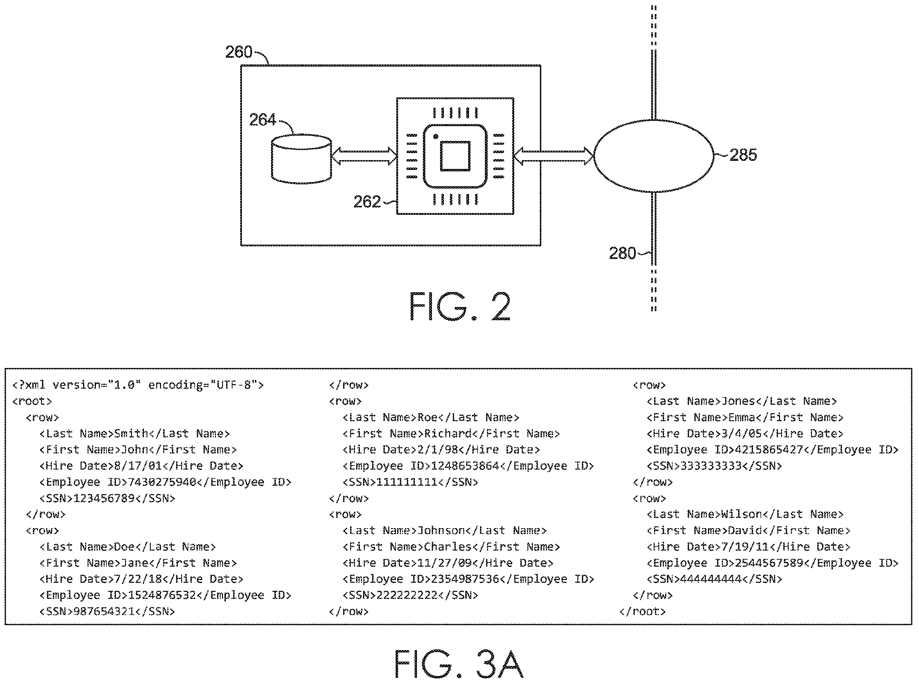

Figure 2 shows in a schematic representation a device 260 for detecting sensitive data records using a preceding data format analysis of the respective data file. The device 260 comprises at least a data processor 262 and a data memory 264 communicatively coupled to the data processor 262. In operation, the data processor 262 is communicatively connected with a DLP interface 285 being inserted in a data line 280. The DLP interface 285 retrieves data files to be checked from the data line 280 and provides the retrieved data files one by one to the data processor 262 and carry out DLP functionality specified in Figure 1.

The data processor 262 is configured / programmed for performing / carrying out the above described method for detecting sensitive data records comprised in the respective data file.

The data memory 264 can be used for storing any data or settings used by the described method for detecting sensitive data records, such as a look-up table. In this look-up table predefined or standardized data formats can be stored in order to allow for a fast identification of the data format of the data file to be analyzed / checked. Further, other pieces of information which may be used e.g. for determining the characteristic feature of the data file may be stored in the memory. Alternatively or in combination, potentially sensitive data records or regexes of potentially sensitive data records can be stored (for comparison purposes) in a look-up table which itself is stored in the memory 264.

According to the exemplary embodiment described here the DLP interface 285 provides necessary DLP functionalities used by the method for detecting sensitive data records described in this document. It may provide the data file and other DLP settings (such as an EDM index). Further, the DLP interface 285 may read the output of the described method for an incident generation, incident responses, a data flow control, and/or for a DLP performance improvement. Furthermore, the DLP interface 285 may even provide a user interface to a customer for setting up DLP rules and doing the corresponding incident remediation etc.

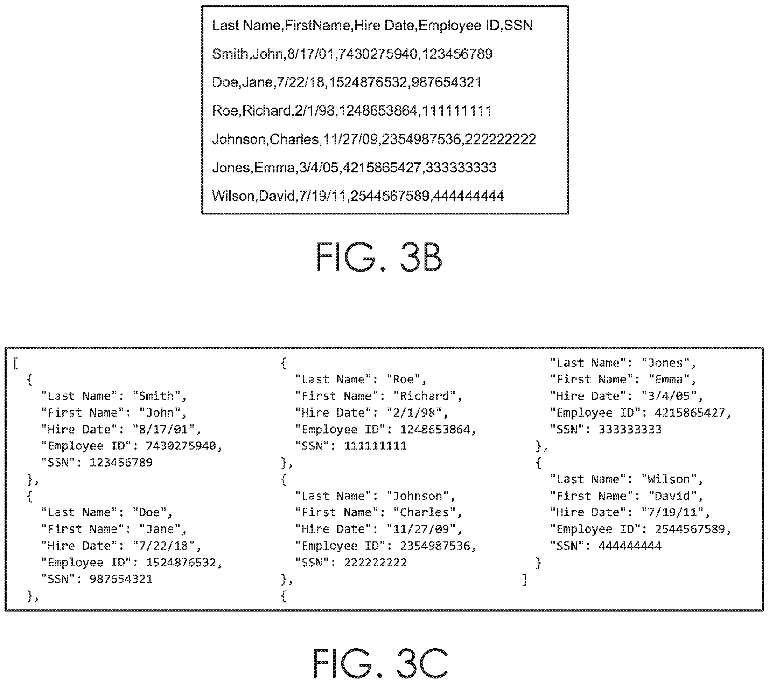

Figure 3a to 3c show examples of two-dimensional data files which could be analyzed / checked with the method described in this document. According to the exemplary embodiments described here the tabular data file contains employee data which are PII and which should be protected from being forwarded to any channel being external from an internal data network of the respective company. Figure 3a shows the data file in the standardized XML format. Figure 3b shows the data file in the standardized CSV format. Figure 3c shows the data file in the standardized JSON format.

In the following exemplary real-life use cases, which can be handled with the method described in this document, are described:
(1) A data file comprising a table with a possible PII data column and a possible name data column, which has, in each column five or more data records, will be blocked from further processing because of the high number of sensitive rows (volume).
(2) A data file comprising a table with a possible PII data column will be allowed for further processing if the PII data fields do not look like real PII numbers because they are identical numbers.
(3) An Excel data file with five or more rows of data records, which data file comprises a date column and a currency column whereby each data entry / data record starts with a '$' sign will be blocked because the maximum money amount is larger than one million and the latest date in the table is less than one week ago.
(4) A data file comprising a table with a possible PII column and a possible name column, which has (in each column) five or more data records, will be blocked because of the comparatively large number of rows. However, if it will be found out that no EDM rule is triggered at the same time, then a suggestion will be given to the DLP administrator (e.g. by means of a pop up message) through the DLP interface in order to review this data file and possibly index this data file to an EDM profile.
(5) The described method can also improve the performance of a current DI implementation by specifying where to find a support keyword. For instance, after the described method has identified the structure of the table, for any matched DI (e.g. a matched US SSN), the search of the "supporting keywords" respectively the "supporting validators" "SSN" or "social security" (for avoiding false positives) can be expanded to the precise entire data record instead of a predefined "neighborhood" which may be too big or too small. Thereby, the search may even include the column "header" as it normally is in the first row of the table.

The method described in this document may provide the following advantages:

There is no need for indexing the data records. For many use cases this may be seen as to represent the most important advantage.

Even with a small computing power the accuracy is high. This can reduce the operational costs.

The volume/sensitivity of the data can be better quantified. The number of data records and the complexity of the identified data format are much more reliable than the size of the data file alone.

Compared to traditional implementation of DI the described method can detect false positives when the whole column is checked. Further, even multiple columns together with or without hints from the table header can be used for detecting false positives.

Use cases can be handled in a reliable manner whereby the information in the respective data file is only sensitive when all necessary information are available, e.g. in multiple columns, such as
(i) a CC number in combination with the respective CVV code (and/or the CC expire date) or (ii) a US SSN in combination with a name.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

### List of reference signs:

- 100: flowchart
- 110: data file input
- 120: process sequence
- 122: identifying data formats
- 124: detecting data records
- 126: determining characteristic features
- 128: calculating sensitivity parameter
- 130: query: sensitivity parameter < threshold ?
- 140a: allowing further processing
- 140b: modifying further processing
- 260: device
- 262: data processor
- 264: memory / look-up table
- 280: data line
- 285: DLP interface

## Claims

1. A method for detecting sensitive data records comprised in a data file, the method comprising
(a) providing the data file;
(b) identifying at least one data format of the provided data file;
(c) detecting data records of the provided data file based on the identified data format;
(d) determining at least one characteristic feature of the provided data file by analyzing the detected data records;
(e) calculating a sensitivity parameter of the provided data file by applying Data Loss Prevention rules to the determined characteristic feature;
(f1) if the calculated sensitivity parameter is below a predefined threshold, allowing a further processing of the data file, and
(f2) if the calculated sensitivity parameter is above a predefined threshold, modifying a further processing of the data file.

2. The method as set forth in the preceding claim, wherein the data file comprises at least a two-dimensional data format.

3. The method as set forth in any one of the preceding claims, wherein
(b) identifying the data format comprises
comparing the format of the data file with at least one predefined data format.

4. The method as set forth in any one of the preceding claims, further comprising
after (c) detecting the data records,
grouping similar data records together.

5. The method as set forth in any one of the preceding claims, further comprising
after (c) detecting the data records,
processing the data records.

6. The method as set forth in the preceding claim, wherein
processing the data records comprises
reorganizing the data records.

7. The method as set forth in any one of the preceding claims, wherein
the characteristic feature is at least one data file feature of the group consisting of
(i) a data volume of the data file,
(ii) a complexity of the identified data format,
(iii) a type of at least one data record, row and/or column,
(iv) at least one data property, such as variability of values or range of values.

8. The method as set forth in any one of the preceding claims, further comprising
determining at least one further characteristic feature of the provided data file and
applying further Data Loss Prevention rules to the at least one further characteristic feature;
wherein for determining the characteristic feature a first subset of the detected data records is used and for determining the further characteristic feature a second subset of the detected data records is used, wherein the second subset is different from the first subset; and
wherein the sensitivity parameter of the provided data file is calculated further based on the determined further characteristic feature.

9. The method as set forth in any one of the preceding claims, wherein
the provided data file comprises a first data file portion and at least one second data file portion, which have been separated from each other into different subordinate files.

10. The method as set forth in any one of the preceding claims, further comprising
(g1) validating a type of at least some detected data records/columns/rows and
(g2) applying a result of validating to Data Identifiers associated with the detected data records.

11. The method as set forth in the preceding claim, further comprising
(h) suggesting a modified or additional Exact Data Matching profile and/or modified or additional Exact Match Data Identifiers based on the at least one characteristic feature.

12. A device for detecting sensitive data records comprised in a data file, the device comprising
a data processor, which is programmed and configured for performing the method as set forth in any one of the preceding claims.

13. A computer program for detecting sensitive data records comprised in a data file, the computer program, when being executed by a data processor, is configured for controlling and/or for carrying out the method as set forth in any one of the preceding method claims.

## Amended claims

### Amended claims in accordance with Rule 137(2) EPC.

1. A method for detecting sensitive data records comprised in a data file, the method comprising
(a) providing the data file;
(b) identifying at least one data format of the provided data file;
(c) detecting data records of the provided data file based on the identified data format and, after detecting the data records, grouping similar data records together;
(d) determining at least one characteristic feature of the provided data file by analyzing the detected data records;
(e) calculating a sensitivity parameter of the provided data file by applying Data Loss Prevention rules to the determined characteristic feature;
(f1) if the calculated sensitivity parameter is below a predefined threshold, allowing a further processing of the data file, and
(f2) if the calculated sensitivity parameter is above a predefined threshold,
modifying a further processing of the data file.

2. The method as set forth in the preceding claim, wherein
the data file comprises at least a two-dimensional data format.

3. The method as set forth in any one of the preceding claims, wherein
(b) identifying the data format comprises
comparing the format of the data file with at least one predefined data format.

4. The method as set forth in any one of the preceding claims, further comprising
after (c) detecting the data records,
processing the data records.

5. The method as set forth in the preceding claim, wherein
processing the data records comprises
reorganizing the data records.

6. The method as set forth in any one of the preceding claims, wherein
the characteristic feature is at least one data file feature of the group consisting of
(i) a data volume of the data file,
(ii) a complexity of the identified data format,
(iii) a type of at least one data record, row and/or column,
(iv) at least one data property, such as variability of values or range of values.

7. The method as set forth in any one of the preceding claims, further comprising
determining at least one further characteristic feature of the provided data file and
applying further Data Loss Prevention rules to the at least one further characteristic feature;
wherein for determining the characteristic feature a first subset of the detected data records is used and for determining the further characteristic feature a second subset of the detected data records is used, wherein the second subset is different from the first subset; and
wherein the sensitivity parameter of the provided data file is calculated further based on the determined further characteristic feature.

8. The method as set forth in any one of the preceding claims, wherein
the provided data file comprises a first data file portion and at least one second data file portion, which have been separated from each other into different subordinate files.

9. The method as set forth in any one of the preceding claims, further comprising
(g1) validating a type of at least some detected data records/columns/rows and
(g2) applying a result of validating to Data Identifiers associated with the detected data records.

10. The method as set forth in the preceding claim, further comprising
(h) suggesting a modified or additional Exact Data Matching profile and/or modified or additional Exact Match Data Identifiers based on the at least one characteristic feature.

11. A device for detecting sensitive data records comprised in a data file, the device comprising
a data processor, which is programmed and configured for performing the method as set forth in any one of the preceding claims.

12. A computer program for detecting sensitive data records comprised in a data file, the computer program, when being executed by a data processor, is configured to carry out the method as set forth in any one of the preceding method claims.
